# EUROPÄISCHE PATENTANMELDUNG

(11) **EP 0 800 861 A2**
(43) Veröffentlichungstag der Anmeldung: **15.10.1997**
(21) Anmeldenummer: 97102468.2
(22) Anmeldetag: 15.02.1997
(51) Int. Cl.: B01J 3/04

(54) **Autoklav**

(30) Priorität: 17.02.1996 DE 19605925
(71) Anmelder: SICOWA Verfahrenstechnik für Baustoffe GmbH & Co. KG, D-52072 Aachen (DE); Hebel Aktiengesellschaft, D-82275 Emmering (DE)
(72) Erfinder: Peifer, Hermann Josef, Dr., 52072 Aachen (DE); Weitzel, Johannes, Dipl.-Ing., 52072 Aachen (DE); Minkenberg, Hans, Dr., 60487 Frankfurt/Main (DE); Wosnitza, Franz, Prof. Dr., 52080 Aachen (DE)
(74) Vertreter: Sparing - Röhl - Henseler Patentanwälte

(57) **Zusammenfassung**

Die Erfindung betrifft einen Autoklav zur Druckdampfbehandlung von porösem, mineralischem Beschickungsgut (5) mit einem von einem Autoklavmantel (1) umschlossenen, im wesentlichen horizontal kreiszylindrischen, einen das Beschickungsgut (5) aufnehmenden Innenraum (2) aufweisenden Inneren und mit einer zur Erzeugung von überhitztem Wasserdampf dienenden Heizeinrichtung (11). Hierbei sind in den seitlichen Krümmungsbereichen des Autoklavmantels (1) gegenüber dem verbleibenden Innenraum (2) getrennte, axiale Dampfzuführkanäle (8') angeordnet, deren Eintrittsöffnungen an ein Gebläse angeschlossen sind,wobei die Leitbleche (6) entlang ihrer sohlenseitigen Unterkante düsenartige Austrittsöffnungen (9) für überhitzten Wasserdampf aufweisen, die derart bemessen und über die Länge des Autoklaven verteilt sind, daß sich eine gleichmäßige Wasserdampfzuführung über die Länge des Autoklaven in den das Beschickungsgut (5) aufnehmenden Innenraum (2) von beiden Seiten her ergibt, während im oberen Bereich des Autoklavmantels (1) Absaugöffnungen (10) für Wasserdampf angeordnet sind.

## Beschreibung

Die Erfindung betrifft einen Autoklav nach dem Oberbegriff des Anspruchs 1.

Aus EP 0 538 756 B1 ist ein Autoklav zur Druckdampfbehandlung von Beschickungsgut, etwa Rohlingen aus Porenbeton oder Schaumsilikat, mit einem von einem Autoklavmantel umschlossenen, im wesentlichen horizontalen zylindrischen Innenraum und mit einer zur Erzeugung von überhitztem Wasserdampf dienenden Heizeinrichtung bekannt, deren Wärmetauscher in den seitlichen Bereichen des Innenraums angeordnet und mit einem Kamin versehen ist, so daß sich eine umlaufende freie Konvektionsströmung ergibt. Bei vorhandenen Autoklaven ist jedoch das Raumangebot für eine optimale Lage und Größe der Wärmetauscher im Hinblick auf eine homogene Trocknung unter Einhaltung der zulässigen Scheitel-/Sohle-Temperaturdifferenz nicht immer gegeben.

Aufgabe der Erfindung ist es, einen Autoklav nach dem Oberbegriff des Anspruchs 1 zu schaffen, der es ermöglicht, eine möglichst homogene Temperaturverteilung im Beschickungsgut bei relativ geringem konstruktivem Aufwand zu erhalten.

Diese Aufgabe wird entsprechend dem kennzeichnenden Teil des Anspruchs 1 gelöst.

Hierbei wird der Wasserdampf über seitliche axiale Dampfzuführkanäle, die gegebenenfalls einen Wärmetauscher zur Erwärmung, Überhitzung bzw. Trocknung des Wasserdampfs enthalten, gefördert und über sohlenseitige Austrittsöffnungen lateral in den das porige, mineralische Beschickungsgut, z.B. Rohlinge aus Porenbeton oder Schaumsilikat, aufnehmenden Innenraum des Autoklavs über dessen Länge möglichst gleichmäßig eingedüst, so daß das Beschickungsgut durch aufsteigenden, überhitzten Wasserdampf gleichmäßig durchströmt und damit umspült und erwärmt wird, wodurch Wasser aus den Poren des Beschickungsgutes verdampft und letzteres getrocknet wird. Der sich dadurch abkühlende Wasserdampf wird an der Oberseite des Autoklavs wieder gesammelt und rückgeführt. Letzteres kann über im Inneren des Autoklavs befindliche Dampfabsaugkanäle oder über eine außerhalb des Autoklavs befindliche Absaugleitung geschehen. Die angegebene Lösung kann sowohl bei neu zu installierenden als auch bei bereits vorhandenen Autoklaven angewandt werden.

Weitere Ausgestaltungen der Erfindung sind der nachfolgenden Beschreibung und den Unteransprüchen zu entnehmen.

Die Erfindung wird nachstehend anhand von in den Abbildungen dargestellten Ausführungsbeispielen näher erläutert.

Fig. 1 zeigt schematisch einen Querschnitt eines Autoklavs.

Fig. 2 zeigt das Prinzip der Dampfführung im Autoklav von Fig. 1 durch entsprechende Wasserdampfströmungslinien.

Fig. 3 bis 5 zeigen schematisch weitere Ausführungsformen eines Autoklavs im Querschnitt mit entsprechenden Wasserdampfströmungslinien.

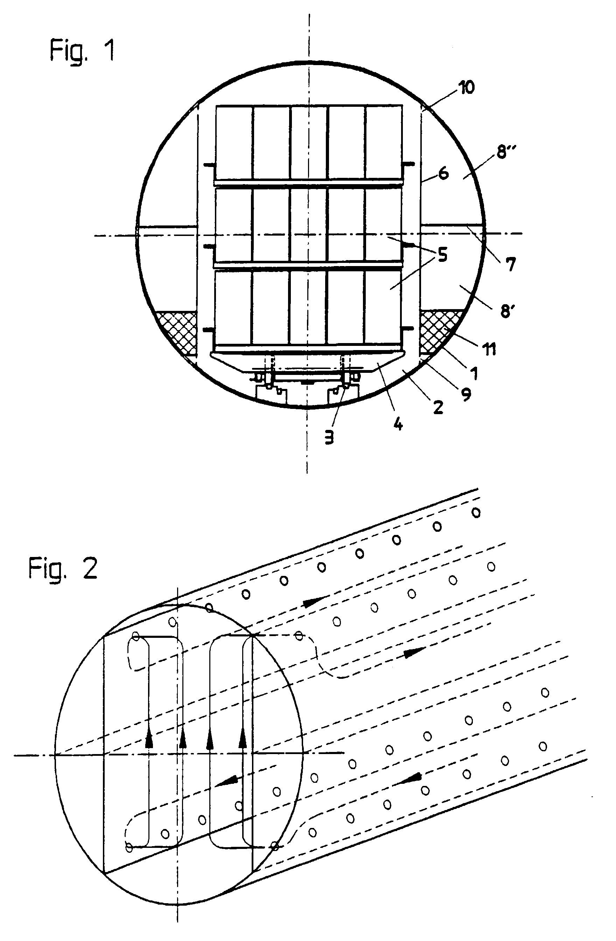

Gemäß Fig. 1 ist ein Autoklav vorgesehen, der einen Autoklavmantel 1 aufweist, der einen im wesentlichen horizontalen, kreiszylindrischen Innenraum 2 umschließt. Der Autoklavmantel 1 ist an einem Ende üblicherweise durch einen Klöpperboden geschlossen, während am anderen Ende, dem Beschickungsende, ein aufklappbarer Deckel vorgesehen ist. Bodenseitig sind Schienen 3 angeordnet, über die bei aufgeklapptem Deckel eine Vielzahl von Wagen 4 mit darauf angeordnetem Beschickungsgut 5 in den Autoklav einfahrbar und aus diesem herausfahrbar sind.

Das Innere des Autoklavs ist durch zwei vertikale Leitbleche 6 unterteilt, so daß die seitlichen Bereiche des Innenraums 2 gegenüber dem das Beschickungsgut 5 aufnehmenden Bereich des Innenraums 2 abgetrennt werden. Zusätzlich ist bei der in Fig. 1 dargestellten Ausführungsform im Bereich der seitlichen Bereiche noch jeweils eine Trennwandung 7 vorgesehen, so daß sich in den seitlichen Bereichen des Innenraums 2 jeweils zwei übereinander angeordnete axiale Kanäle 8', 8'' zur Wasserdampfzu- bzw. -abführung bezüglich des Innenraums 2 befinden.

Den axialen Kanälen 8', 8'' ist Wasserdampf von einem Ende her axial zuführbar. Dies geschieht mittels eines oder mehrerer innerhalb oder außerhalb des Autoklavs angeordneten Gebläses bzw. Gebläsen. Wenn ein einzelnes Gebläse innerhalb des Autoklavs angeordnet ist, befindet es sich zweckmäßigerweise benachbart zum geschlossenen Ende des Autoklavs und ist als Radialgebläse mit einer Dampfumlenkeinrichtung mit entsprechenden Eintritts- bzw. Austrittsöffnungen für Wasserdampf zu den axialen Kanälen 8' zur axialen Wasserdampfzuführung bzw. den axialen Kanälen 8'' zur axialen Wasserdampfabführung ausgebildet.

Die Leitbleche 6 besitzen entlang ihrer sohlenseitigen Unterkante düsenartige Austrittsöffnungen 9 für überhitzten Wasserdampf. Die Austrittsöffnungen 9 sind derart bemessen und über die Länge des Autoklavs verteilt, daß sich eine gleichmäßige Wasserdampfzuführung über die Länge des Autoklavs in den das Beschickungsgut 5 aufnehmenden Bereich des Innenraums 2 von beiden Seiten her ergibt. Die Austrittsöffnungen 9 befinden sich zweckmäßigerweise unterhalb der Unterseite des Beschickungsgutes 5. Auf diese Weise wird überhitzter Wasserdampf von unten her im wesentlichen senkrecht zur Achse des Autoklavs in den Innenraum 2 gleichmäßig über die Länge des Autoklavs verteilt lateral eingeblasen, um dann im oberen Bereich des Autoklavs wieder abgeführt zu werden, so daß sich eine im wesentlichen in Radialebenen stattfindende Zwangsströmung von Wasserdampf durch das Beschickungsgut 5 von unten nach oben ergibt.

Zum Abführen des abgekühlten Wasserdampfs, der das Beschikkungsgut 5 durchströmt hat, sind bei dem Ausführungsbeispiel von Fig. 1 im oberen Bereich der Leitbleche 6 Absaugöffnungen 10 für den Wasserdampf angeordnet. Die Absaugöffnungen 10 sind im wesentlichen entsprechend den Austrittsöffnungen 9 angeordnet und münden in den oberen Kanal 8'', so daß der hierüber abgeführte Wasserdampf über den axialen Kanal 8'' axial abgeführt wird.

Zum Überhitzen kann eine externe Heizeinrichtung vorgesehen sein, jedoch wird es bevorzugt, wenn im unteren Bereich des Kanals 8', über den Wasserdampf axial zugeführt wird, um lateral in den Innenraum 2 eingedüst zu werden, ein sich praktisch über dessen Länge erstreckender, von einem Heizmedium durchflossener Wärmetauscher 11 vorgesehen ist, der vom Wasserdampf auf seinem Weg zum Innenraum 2 durchströmt und hierbei überhitzt wird.

Neben einem geringeren Druckverlust und damit geringerer Antriebsleistung des Gebläses wird durch innen angebrachte Wärmetauscher eine axial homogenere Überhitzung des Wasserdampfs erreicht.

Der Autoklav bleibt im wesentlich isobar, der durch das Gebläse bewirkte Druckunterschied beträgt nur wenige mbar. Die Strömungsgeschwindigkeit des Wasserdampfes hängt von der Gebläseleistung und der Ausbildung der düsenartigen Austrittsöffnungen 9 ab.

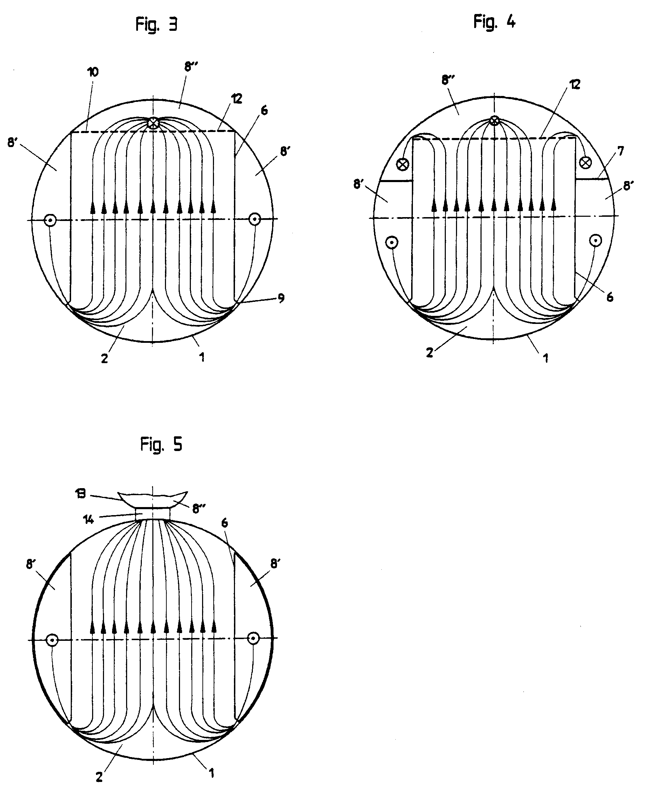

Der Kanal 8'' zum Abführen des Wasserdampfs, nachdem dieser das Beschickungsgut 5 durchströmt hat, kann auch durch den oberen Bereich des Innenraums 2 und ein diesen vom restlichen Innenraum 2 abtrennendes Lochblech 12 zur Strömungsvergleichmäßigung gebildet werden, wobei die Öffnungen in letzterem die Absaugöffnungen 10 bilden; vgl. Fig. 3.

Zusätzlich kann ein Teil der seitlichen Bereiche des Innenraums 2, wie in Fig. 4 dargestellt, zum axialen Kanal 8'' gehören.

Der axiale Kanal 8'' kann auch außerhalb des Autoklavmantels 1 in Form einer Rohrleitung 13 angeordnet sein, wobei entsprechende Absaugstutzen 14 mit Absaugöffnungen, die zum Innenraum 2 des Autoklavmantels 1 offen sind, den Innenraum 2 mit der Rohrleitung 13 verbinden, wobei die Rohrleitung 13 zu dem Gebläse führt, das den abgesaugten Wasserdampf über die axialen Kanäle 8' wieder in den Innenraum 2 des Autoklavmantels 1 - nach vorheriger oder bei gleichzeitiger überhitzung - eindrückt; vgl. Fig. 5.

Die Kanäle 8' bzw. 8'' können auch als vorgefertige Einheiten in den Autoklav einschiebbar und dort befestigbar sein, wie in Fig. 5 dargestellt ist. Hierbei können gegebenenfalls die Leitbleche 6 als Halterungen für die vorgefertigten Kanäle 8' bzw. 8'' dienen, wobei die Kanäle 8' Wasserdampfaustrittsöffnungen aufweisen, die abwärts zum Wärmetauscher 11 bzw. zu den Austrittsöffnungen 9 gerichtet sind.

Die Drehrichtung des Gebläses ist vorzugsweise umkehrbar, so daß über den dadurch bewirkten Reversierbetrieb eine Vergleichmäßigung der Restfeuchte im Beschickungsgut 5 erreicht werden kann.

Die Austrittsöffnungen 9 können beispielsweise schlitzförmig und insbesondere diffusorartig ausgebildet sind.

## Patentansprüche

1. Autoklav zur Druckdampfbehandlung von porösem, mineralischem Beschickungsgut (5) mit einem von dem Autoklavmantel (1) umschlossenen, im wesentlichen horizontalen, kreiszylindrischen Innenraum (2) und mit einer zur Erzeugung von überhitztem Wasserdampf dienenden Heizeinrichtung (11), dadurch **gekennzeichnet,** daß in den seitlichen Bereichen des Innenraums (2) gegenüber dem das Beschickungsgut (5) aufnehmenden Bereich des Innenraums (2) mit Hilfe von Leitblechen (6) getrennte, axiale Dampfzuführkanäle (8') angeordnet sind, deren Eintrittsöffnungen an ein Gebläse angeschlossen sind, wobei die Leitbleche (6) entlang ihrer sohlenseitigen Unterkante düsenartige Austrittsöffnungen (9) für den überhitzten Wasserdampf aufweisen, die derart bemessen und über die Länge des Autoklavs verteilt sind, daß sich eine gleichmäßige Wasserdampfzuführung über die Länge des Autoklavs in den das Beschickungsgut (5) aufnehmenden Bereich des Innenraums (2) von beiden Seiten her ergibt, während im oberen Bereich des Autoklavmantels (1) Absaugöffnungen (10) für Wasserdampf angeordnet sind.

2. Autoklav nach Anspruch 1, dadurch gekennzeichnet, daß die seitlichen und gegebenenfalls oberen Bereiche des Innenraums (2) zwei untere Dampfzuführkanäle (8') und mindestens einen oberen Dampfrückführkanal (8'') enthalten.

3. Autoklav nach Anspruch 2, dadurch gekennzeichnet, daß die Absaugöffnungen (10) entlang der oberen Kante der Leitbleche (6) angeordnet sind.

4. Autoklav nach Anspruch 2, dadurch gekennzeichnet, daß der Dampfrückführkanal (8'') durch ein Diffusorblech (12) nach unten begrenzt ist.

5. Autoklav nach einem der Ansprüche 2 bis 4, dadurch gekennzeichnet, daß die Dampfzuführ- und Dampfrückführkanäle (8', 8'') an einer über das am verschlossenen Ende des Autoklavmantels (1) angeordnete Gebläse führenden Dampfumlenkeinrichtung münden.

6. Autoklav nach Anspruch 1, dadurch gekennzeichnet, daß die Absaugöffnungen (10) im Autoklavmantel (1) angeordnet und mit einer auf dem Autoklav angeordneten Absaugleitung (13) verbunden sind.

7. Autoklav nach einem der Ansprüche 1 bis 6, dadurch gekennzeichnet, daß in den Dampfzuführkanälen (8') heizmitteldurchströmte Wärmetauscher (11) vorgesehen sind, die über die gesamte Länge der Dampfzuführkanäle (8') angeordnet sind.

8. Autoklav nach einem der Ansprüche 1 bis 7, dadurch gekennzeichnet, daß die Austrittsöffnungen (9) unterhalb der Unterseite des Beschickungsgutes (5) angeordnet sind.

9. Autoklav nach einem der Ansprüche 1 bis 8, dadurch gekennzeichnet, daß die Austrittsöffnungen (9) schlitzförmig sind.

10. Autoklav nach einem der Ansprüche 1 bis 8, dadurch gekennzeichnet, daß die Austrittsöffnungen (9) diffusorartig ausgebildet sind.

11. Autoklav nach einem der Ansprüche 1 bis 10, dadurch gekennzeichnet, daß der Abstand der Austrittsöffnungen (9) entsprechend einem gleichmäßigen Auströmen von Wasserdampf über die axiale Länge der Dampfzuführkanäle (8') variiert.

12. Autoklav nach einem der Ansprüche 1 bis 11, dadurch gekennzeichnet, daß die Dampfzuführkanäle (8') und gegebenenfalls die Dampfabführkanäle (8'') vorgefertige, in den Autoklavmantel (1) einsetzbare Einheiten sind.

13. Autoklav nach einem der Ansprüche 1 bis 12, dadurch gekennzeichnet, daß die Drehrichtung des Gebläses umkehrbar ist.
